(19) Europäisches Patentamt / European Patent Office / Office européen des brevets

(11) **EP 4 676 885 B1**

(12) **EUROPEAN PATENT SPECIFICATION**

(45) Date of publication and mention
of the grant of the patent:
**20.05.2026 Bulletin 2026/21**

(21) Application number: **24707228.3**

(22) Date of filing: **29.02.2024**

(51) International Patent Classification (IPC):
*C01G 53/00* (2025.01)  *H01M 4/00* (2006.01)

(52) Cooperative Patent Classification (CPC):
**C01G 53/42; C01G 53/50; H01M 4/505;**
**H01M 4/525;** C01P 2004/61; C01P 2004/80;
H01M 2004/028

(86) International application number:
**PCT/EP2024/055166**

(87) International publication number:
**WO 2024/184162 (12.09.2024 Gazette 2024/37)**

(54) **PROCESS FOR MAKING PARTICULATE (OXY)HYDROXIDES OF NICKEL AND METAL OTHER THAN NICKEL**

VERFAHREN ZUR HERSTELLUNG VON TEILCHENFÖRMIGEN (OXY)HYDROXIDEN AUS NICKEL UND EINEM ANDEREN METALL ALS NICKEL

PROCÉDÉ DE FABRICATION D'(OXY)HYDROXYDES PARTICULAIRES DE NICKEL ET DE MÉTAL AUTRE QUE LE NICKEL

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Validation States:
**MA**

(30) Priority: **08.03.2023 EP 23160692**

(43) Date of publication of application:
**14.01.2026 Bulletin 2026/03**

(73) Proprietor: **BASF SE**
**67056 Ludwigshafen am Rhein (DE)**

(72) Inventors:
• **BAAN, Zoltan**
**00180 Helsinki (FI)**
• **BEIERLING, Thorsten**
**38300 Wolfenbuettel (DE)**
• **GRUNEWALD, Frederick Arthur**
**Iselin, New Jersey 08830 (US)**

(74) Representative: **BASF IP Association**
**BASF SE**
**GBI - Z078**
**67056 Ludwigshafen (DE)**

(56) References cited:
**EP-A1- 2 619 140   WO-A1-2011/071068**

• **LUO QIYUE ET AL: "A green and economical**
**route to the precursor for the synthesis of single**
**crystal LiNi0.5Co0.2Mn0.3O2", CERAMICS**
**INTERNATIONAL, ELSEVIER, AMSTERDAM, NL,**
**vol. 48, no. 12, 25 February 2022 (2022-02-25),**
**pages 16737 - 16743, XP087040598, ISSN:**
**0272-8842, [retrieved on 20220225], DOI: 10.1016/**
**J.CERAMINT.2022.02.223**

**Description**

The present invention is directed towards a process for making a particulate (oxy)hydroxide of TM wherein TM is a combination of nickel and at least one metal selected from Co and Mn and wherein TM is defined according to general formula (I)

$$(Ni_aCo_bMn_c)_{1-d}M_d \qquad (I)$$

wherein

a is in the range of from 0.25 to 0.98,
b is zero or in the range of from 0.02 to 0.2,
c is in the range of from zero to 0.75, and
d is in the range of from zero to 0.1, and

$$a + b + c = 1,$$

and b + c > zero,
M is selected from Ti, Zr, Mo, W, Al, Sb, Mg, Nb, and Ta and combinations of at least two of the foregoing,
and wherein said process comprises the steps of:

(a) precipitating a hydroxide of TM by combining one or more aqueous solution(s) ($\alpha$) containing sulfates of Ni and of at least one transition metal selected from Co and Mn, and, optionally, at least one further metal selected from Ti, Zr, Mo, W, Al, Sb, Mg, Sb, Nb, and Ta, and an aqueous solution ($\beta$) containing sodium hydroxide and, optionally, an aqueous solution ($\gamma$) containing a complexing agent, in a stirred tank reactor,
(b) separating off precipitated hydroxide of TM from the continuous phase by way of a filtration step, thereby obtaining a washed filter cake and a filtrate that contains sodium sulfate,
(c) followed by washing the resultant filter cake with an aqueous medium, thereby obtaining a washed filter cake and a wash filtrate that contains sodium sulfate,
(d) removing water from the wash filtrate, thereby obtaining a concentrated filtrate,
(e) at least partially recycling the water from step (d) and using it as at least as a part of

(e1) aqueous medium for washing in the filtration step (c) or
(e2) reaction medium in step (a), or
(e3) process water,

and wherein at least a part of the filtrate from step (b) is combined with the wash filtrate from step (c).

Lithiated transition metal oxides are currently being used as electrode active materials for lithium-ion batteries. Extensive research and developmental work have been performed in the past years to improve properties like charge density, specific energy, but also other properties like the reduced cycle life and capacity loss that may adversely affect the lifetime or applicability of a lithium-ion battery. Additional effort has been made to improve manufacturing methods.

In a typical process for making cathode materials for lithium-ion batteries, first a so-called precursor is being formed by co-precipitating the transition metals as carbonates, oxides or preferably as hydroxides that may or may not be basic, for example oxyhydroxides. The precursor is then mixed with a source of lithium such as, but not limited to LiOH, $Li_2O$ or $Li_2CO_3$ and calcined (fired) at high temperatures. Lithium source(s) can be employed as hydrate(s) or in dehydrated form. The calcination - or firing, often also referred to as thermal treatment or heat treatment of the precursor - is usually carried out at temperatures in the range of from 600 to 1,000 °C. During the thermal treatment the electrode active material is formed. The thermal treatment is performed in the heating zone of an oven or kiln.

A typical class of cathode active materials delivering high energy density contains a high amount of Ni (Ni-rich), for example at least 80 mol-%, referring to the content of non-lithium metals. Another typical class of cathode active materials exhibiting a high energy density are so-called manganese-rich materials, for example disclosed in WO 2021/037678. However, especially in batch-type battery material precursor manufacturing processes, morphology gradients in the precursor and the resulting cathode active material have been observed which has negative impact on the electrochemical performance. In addition, the processes to manufacture such materials and especially their precursors usually create a lot of wastewater.

EP2619140 discloses the preparation of oxyhydroxides comprising Ni, Co, Mn, as well as oxyhydroxide or oxide particulates of NCM523 having a D50 of 10 $\mu$m and a sulfate amount of 0.5%.

**EP 4 676 885 B1**

It is still an objective to provide cathode active materials with an excellent electrochemical performance, and to provide a process for manufacturing such cathode active materials including their precursors.

It was found that by using an improved water management in the precursor production process an improved precursor impurity profile may be obtained. Said impurities particularly refer to sulfate that may be incorporated through the co-precipitation process. Especially the sodium sulfate concentration in the mother liquor has been found to leading to unfavorable sulfate gradients over the particle radius.

Accordingly, the process as defined at the outset has been found, hereinafter also referred to as inventive process. The inventive process comprises the steps (a) to (e), hereinafter also referred to as step (a) or in brief as (a), step (b)or in brief as (b), etcetera. The inventive process will be described in more detail below.

Step (a) includes combining an aqueous solution containing sulfates of nickel and at least one metal selected from cobalt and manganese with an aqueous solution of sodium hydroxide in the optional presence of a complexing agent, preferably ammonia or a salt of ammonia.

The relative amounts of nickel and the at least one metal selected from cobalt and manganese may be selected in wide ranges. Nickel may amount from 25 to 98 mol-% of the metals other than alkali metal. Cobalt may be absent or present and may then amount from 1 to 20 mol-%, preferably 3 to 12 mol-% of the metals other than alkali metal. Manganese may be absent or present and may then amount from 1 to 75 mol-% preferably 2 to 68 mol-% of the metals other than alkali metal. Further metals that may be present in step (a) are magnesium or aluminum, for example up to 2 mol-% of magnesium, or up to 10 mol-% of aluminum. When aluminum is present in amounts of 3 to 10 mol-%, it is preferred that cobalt is present as well.

In the course of step (a), a co-precipitation is performed.

In one embodiment of the present invention, at least one of aluminum or magnesium is included in the precipitation in step (a) by introducing at least one of $MgSO_4$, $Al_2(SO_4)_3$, $NaAl(OH)_4$, $NaAl(SO_4)_2$, or $KAl(SO_4)_2$.

Sodium hydroxide is able to absorb carbon dioxide from air, and frequently, technical grade sodium hydroxide contains some sodium carbonate, for example up to 0.5 by weight, preferably 0.1 to 0.4% by weight. By applying such technical grade sodium hydroxide, mixed hydroxides/carbonates are precipitated but they are included in the definition of hydroxides as well.

In one embodiment of the present invention, in step (a), the stoichiometric ratio of sodium hydroxide to the sum of nickel and other metals is about 2:1. The term "about" in this context refers to $\pm$ 2 mol-% deviation of the hydroxide content to the ratio that would correspond to an exact stoichiometric ratio. In case a dopant such as aluminum is present, the amount of hydroxide may vary, also depending on the nature of the source of aluminum and depending on the amount of a complexing agent, for example ammonia.

In one embodiment of the present invention, in step (a), a complexing agent selected from ammonia, glycine, tartrate, citrate, and oxalate is used. In the context of the present invention, the term glycine includes the compound glycine and its alkali metal salts, for example the potassium or preferably the sodium salt. The terms tartrate and oxalate include the respective free acids and the mono- and dialkali metal salts, for example the mono- or di-potassium salts or the mono- or disodium salts or mixed sodium and potassium salts. The term "citrate" includes citric acid and its alkali metal salts, for example the mono- or di- or trisodium salts.

Complexing agents are preferably used in step (a), and the economically most favorable complexing agent is ammonia which may be used directly or as ammonium salt, for example as ammonium sulfate. Upon neutralization with hydroxide, ammonia is formed.

A preferred molar ratio of ammonia to TM (metals other than alkali metal) is in the range of from 1:10 to 1:1, more preferred from 1:8 to 1:2.

By combining aqueous solution containing sulfates of nickel and at least one metal selected from cobalt and manganese with an aqueous solution of sodium hydroxide or sodium carbonate, in the presence of ammonia or a salt of ammonia, a mixed metal hydroxide is precipitated. Said mixed metal hydroxide is suspended (slurried) in a continuous phase that contains sodium sulfate, and traces of nickel and further transition metal salts or excess of sodium hydroxide and ammonia.

In one embodiment of the present invention, step (a) is carried out at a temperature in the range of from 15 to 80°C, preferably 40 to 70°C.

Step (a) is preferably carried out together with a mixing operation, for example stirring.

In step (a), a slurry of precipitated mixed metal hydroxide of TM - nickel and the at least one metal selected from cobalt and manganese - is obtained that may or may not contain at least one dopant selected from Ti, Zr, Mo, W, Al, Sb, Mg, Nb, and Ta.

In one embodiment of the present invention, step (a) is carried out at a pH value in the range of from 10 to 13, preferably 10.5 to 12.5. The pH value is determined at 23°C and refers to the continuous phase.

In one embodiment of the present invention, the concentration of mixed metal hydroxide may be enhanced by performing step (a) in a stirred vessel that is connected to a solid-liquid separation device like clarifier, for example lamellar clarifier or candle filters or thickeners. Through such solid-liquid separation device, continuous phase may be removed from the stirred vessel. The continuous phase so removed is preferably combined with the filtrate from step (b). Such continuous phase may contain 5 to 20 % by weight of $Na_2SO_4$.

In step (b), the precipitated hydroxide of nickel and the at least one metal selected from cobalt and manganese is removed by filtration. Said filtration may be carried out batch-wise or continuously, for example with a filter, especially with a filter press or with a belt filter or by suction filtration. A filter press is preferred.

By filtration, a filter cake is obtained and a filtrate that contains sodium sulfate. The concentration of sodium sulfate in the filtrate resulting from step (b) is comparably high, for example in the range of from 5 to 20% by weight of $Na_2SO_4$.

In step (c), the filter cake is washed with an aqueous medium, for example with water or with an aqueous solution of sodium hydroxide. Said aqueous medium used for washing may contain some sodium sulfate, for example 50 to 1,000 ppm. After washing, the wash filtrate is then combined with at least a part of the filtrate from step (b) and, preferably, with continuous phase removed in step (a) through said solid-liquid separation device such as a lamellar clarifier or thickener or candle filter.

In one embodiment of the present invention, the filtrate from step (c) may contain 1 to 5% by weight of $Na_2SO_4$. In other embodiments, said wash filtrate may contain 50 to 10,000 ppm of $Na_2SO_4$, ppm referring to ppm by weight. The pH value of said filtrate may be in the range of from 7 to 14, preferably from 8 to 10.

In another embodiment of step (c), the pH value of the filtrate from step (c) has a pH value in the range of from 10 to 14.5, preferably from 11.1 to 14.0.

In one embodiment of step (c), filter cake from step (c) is pre-dried by blowing a gas, for example nitrogen or air, through the filter cake.

In the subsequent steps, the term filtrate refers to the filtrate from step (c) with or preferably without the filtrate from step (b).

In one embodiment of step (c), the pH value of the combined filtrate and liquid phase withdrawn in step (a) has a pH value in the range of from 10 to 13.5, preferably from 11.1 to 12.5.

In step (d), water is removed from the combined filtrate from step (c) and liquid phase withdrawn in step (a) or from the combined filtrate from step (c) and at least parts of filtrate from step (b) or preferably, from filtrate from step (c) only. Said water removal may be performed by reverse osmosis. A reverse osmosis includes the step of passing the filtrate from step (c) along a porous membrane, for example with nanopores with pore widths of 2 nm or less, under a pressure of up to 160 bar, preferably up to 120 bar.

Said porous membrane may be composed of a polymer, for example: PES, PTFE, PVDF, PE, PP. In another embodiment, porous membrane may be made from a ceramic material such as $Al_2O_3$, $TiO_2$, $ZrO_2$, SiC or sinter metals. More preferable ceramic membranes are made from $Al_2O_3$.

Said polymeric or ceramic membrane preferably has pores with an average diameter from 2 nanometers to 3 $\mu$m, preferably from 20 to 400 nm and more preferably from 50 to 100 nm. To enhance the abrasion resistance of ceramic membranes, a porous membrane comprising two or three membrane layers can be used, for example 800 nm, then 400 nm and finally 100 nm, or 400 nm, then 200 nm and finally 100 nm and more preferable 400 nm, 200 nm and 50 nm.

The temperature in the reverse osmosis step is preferably in the range of from 20 to 35°C. By a reverse osmosis, a permeate is obtained that is almost pure water. In addition, a retentate may comprise at least 160 g/l sodium sulfate, which corresponds to at least 15 wt.-%. Preferred are at least 225 g/l sodium sulfate which corresponds to 18.8 wt.-%. A feasible upper limit is 30% by weight. The reverse osmosis serves to remove water and to increase the concentration of sodium sulfate in the retentate. The water may then be used as reaction medium in step (a) of the inventive process, thus, the water is then recycled for another step (a).

In one embodiment wherein step (d) is performed by reverse osmosis, the obtained permeate may contain 0.2% by weight of sodium sulfate or less.

In one embodiment of the present invention, a reverse osmosis is carried out in at least two stages, for example 2 to 10, and the respective membranes are arranged as a train. Possible arrangements of the membrane(s) are spiral wound and hollow fiber arrangements but preferred are disk and tube designs. At pressures up to 120 bar, spiral wound arrangements are preferred.

By performing step (d), in addition, a concentrated filtrate - the retentate - is obtained and a permeate. The permeate may be used as recycled water.

In one embodiment of the present invention, a part of the concentrated filtrate from step (d) is worked up by ammonia stripping, followed by an ultrafiltration of any transition metal oxide precipitations and removing the sodium sulfate. Methods of removal are electrodialysis and especially crystallizing the $Na_2SO_4$, for example by evaporation crystallization. The water distilled off in the course of an evaporation crystallization may be condensed and recycled as well, before or after mixing with water obtained in step (d).

In one embodiment of the present invention, a separate reverse osmosis is performed on mother liquor withdrawn in step (a) through solid-liquid separation device. Examples of such devices are clarifiers, thickeners or candle filters, especially lamellar clarifiers and thickeners. The resulting permeate may then be combined with permeate from step (d).

While steps (a) and (b) may be carried out continuously or batch-wise, water removal in step (d) is preferably operated continuously and in the steady state.

In step (e), the water obtained from step (d) is recycled by using it as at least as a part of the

(e1) water in the filtration step (c) or
(e2) reaction medium in step (a) or
(e3) process water.

Preferably, water obtained from step (d) is used as water in filtration step (c) or reaction medium in step (a) without dilution with fresh water.

In an alternative version of step (c), water from step (d) and fresh water may be used in a volume range of from 10:1 to 1:10.

In one embodiment of step (e1) or (e2), respectively, recycled water from step (d) is used in a dilution of 1:10 to 10:1 with fresh water as wash water in step (c) or reaction medium in step (a). Fresh water here denotes water that has not undergone the treatment of steps (a) to (d).

In one embodiment of step (e2), recycled water from step (d) is used in a dilution of 1:10 to 10:1 with fresh water for the manufacture of aqueous solution(s) ($\alpha$) or an aqueous solution ($\beta$).

In the context of the present invention, process water (e3) is defined as any aqueous medium in steps other than the co-precipitation step (a) wherein minor quantities of sodium sulfate can be tolerated. Examples are water for purging the reaction vessel of step (a), the initial charge of the reaction vessel before commencement of the co-precipitation, water for cleaning pipes and filter units and the like.

In one embodiment of the present invention, the sulfate content of wash water before commencing step (b) or of the reaction medium at the beginning of step (a) is up to 2 % by weight.

In one embodiment of the present invention, a part of the mother liquor withdrawn during step (a) through a solid-liquid separation device is mixed with the concentrated filtrate from step (d) and optionally with the main filtrate from step (b) and wherein the resultant mixture is split into a concentrated stream and water in another equipment in analogy to step (d) and wherein at least parts of the obtained water are used analogously to step (e). Said steps are also referred to as steps (f) and (g), respectively.

By preforming the inventive process, a precursor for a cathode active material for lithium-ion batteries may be manufactured with a minimum freshwater consumption.

It has been found that, by performing the inventive process, a particulate precursor of a cathode active material is obtained with a novel distribution of sulfate over the radius of the respective particles. The sulfate is distributed in a gradient over the particle radius with a higher sulfate concentration in the outer sphere of the particles than in the core by a factor of at most 2.0. In the reference processes, without the performing the inventive process, the sulfate gradient is more pronounced. Another aspect of the present invention is thus a particulate (oxy)hydroxide or oxide of TM wherein TM is a combination of nickel with of at least one metal selected from cobalt and manganese, wherein said particulate (oxy)hydroxide has a median particle diameter (d50) in the range of from 2 to 20 $\mu$m and wherein sulfate is distributed in a gradient over the particle radius with a higher sulfate concentration in the outer sphere of the particles than in the core by a factor of at most 2.0, and wherein said particulate oxide or (oxy)hydroxide has a span of the particle diameter of the secondary particles in the range of from 0.15 to 0.7 as determined by laser diffraction, and wherein the span refers to (D90 - D10)/D50. Such particulate (oxy)hydroxide or oxide of TM is also referred to as inventive precursor. Preferably at least 60 mol-% of TM is nickel, more preferably 82 to 97 mol-%. In other embodiments, at least 60 mol-% of TM is manganese, for example 60 to 75 mol-%.

A gradient of 1.0 refers to an even distribution of sulfate over the particle radius.

Preferably, the outer sphere has a thickness in the range of from 0.5 to 2 $\mu$m but is attributable to at most 50% of the radius of inventive particles.

The term (oxy)hydroxide does not only include compounds with a molar oxide : hydroxide ratio of 1:1 but any compound of TM in which the molar ratio oxide : hydroxide is in the range of from 10:1 to 1:10.

After having performed step (c), in order to collect inventive particulate (oxy)hydroxide of TM, the washed filter cake is dried preferably at a temperature in the range of from 80 to 120°C, for example under air or in vacuo. Said drying may be performed over a time of 30 minutes to 24 hours.

In an optional step (h), (oxy)hydroxide of TM as provided after drying the filter cake of step (c) is calcined at a temperature in the range of from 400 to 600°C, thereby obtaining an oxide or of TM with a residual moisture content of from 200 to 500 ppm. Especially when TM contains significant amounts of manganese, a partial oxidation of TM and specifically of the manganese takes place, and the oxide is not strictly stoichiometric TMO.

The residual moisture content may be determined, e.g., by Karl-Fischer Titration.

Step (h) may have a duration in the range of from 0.5 to 7 hours, preferably 1 to 2 hours.

In one embodiment of the present invention, step (h) is carried out in a roller hearth kiln, a pusher kiln or preferably in a plough-share mixer with heating system, and even more preferred in a rotary kiln, for example in a rotary kiln with inclination angle of from 0.5 to 3°. In rotary kilns, 0.5 to 2 revolutions per minute are preferred. On lab scale, step (h) may be carried out in a muffle oven as well.

In one embodiment of the present invention, step (h) is carried out under an atmosphere of air, synthetic air or nitrogen.

In an alternative embodiment, the washed filter cake of step (c) may be transferred directly into a furnace, for example a rotary kiln, and dried and dehydrated in a single furnace. Such a furnace then preferrable has at least two temperature zones, for example three or four, with the highest temperature being in the range of from 400 to 600°C.

A further aspect of the present invention is directed to precursors, namely, oxides or (oxy)hydroxides of TM. They are most preferably made according to the inventive process.

In one embodiment of the present invention, inventive precursor is comprised of secondary particles that are agglomerates of primary particles. The average diameter (D50) of inventive precursor is preferably in the range of from 2 to 20 $\mu$m, more preferably 3 to 17 $\mu$m and even more preferably 3 to 5 or 7 to 15 $\mu$m. The average particle diameter may be determined, e. g., by light scattering or LASER diffraction or electroacoustic spectroscopy. The above particle diameter refers to the secondary particle diameter. Although the (D50) is more accurately referred to as median value or the percentile 50, in this application it will also be referred to as average diameter.

The span of the particle diameter distribution of inventive precursor - hereinafter also referred to as "span" - is in the range of from 0.15 to 0.70, preferably 0.18 to 0.55 and more preferably 0.20 to 0.35. The span is defined as [(D90) - (D10)]/(D50), with the values of (D90), (D50) and (D10) being determined by dynamic light scattering and referring to the respective percentile values. In an alternative embodiment, the span of the particle diameter distribution of inventive precursor is in the range of from 0.71 to 2.0, preferably 0.80 to 1.50.

The secondary particles of inventive precursor may have an irregular shape but in a preferred embodiment, said particulate material has a regular shape, for example spheroidal or even spherical. The aspect ratio may be in the range of from 1 and 10, preferably from 1 to 3 and even more preferably from 1 to 1.5. The aspect ratio is defined as the ratio of width to length or specifically the particle diameter in the longest dimension versus the particle diameter in the shortest dimension. Perfectly spherical particles would have an aspect ratio of 1.

Primary particles of inventive precursor may have a needle or platelet type shape. The diameter of primary particles of inventive precursors is referring to the diameter of the secondary particles.

In one embodiment of the present invention, the oxide of TM from step (h) has a specific surface (BET) in the range of from 50 to 120 m$^2$/g, determined by nitrogen adsorption after drying at 120°C for 60 minutes, for example in accordance with to DIN-ISO 9277:2003-05.

In an alternative embodiment, the washed filter cake of step (c) may be transferred directly into a furnace, for example a rotary kiln, and dried and dehydrated in a single furnace. Such a furnace then preferrable has at least two temperature zones, for example three or four, with the highest temperature being in the range of from 400 to 600°C.

In one embodiment of the present invention, inventive particulate oxide has a moisture content in the range of from 10 to 2,000 ppm, determined by Karl-Fischer titration. The ppm are weight ppm or ppm by weight.

TM in inventive precursor is a combination of metals according to general formula (I)

$$(Ni_aCo_bMn_c)_{1-d}M_d \qquad (I)$$

with

a being in the range of from 0.25 to 0.98,
b being zero or in the range of from 0.02 to 0.2,
c being in the range of from zero to 0.75, and
d being in the range of from zero to 0.1, for example zero or 0.01 to 0.05,
M is selected from Mg, Al, Ti, Zr, Mo, W, Nb, Sb, and Ta,

$$a + b + c = 1,$$

and b + c > zero.

In a preferred embodiment of the present invention, the variables in TM are defined as follows

a is in the range of from 0.6 to 0.98,
b is in the range of from 0.02 to 0.2,
c is in the range of from zero to 0.2, and

d is in the range of from zero to 0.1, for example zero or 0.01 to 0.05.

In another preferred embodiment of the invention, TM corresponds to general formula (I a)

$$(Ni_aCo_bMn_c)_{1-d}M_d \qquad (I\ a)$$

with

a being in the range of from 0.25 to 0.4,
b being in the range of from zero to 0.2,
c being in the range of from 0.6 to 0.75, and
d being in the range of from zero to 0.1, for example zero or 0.01 to 0.05,
M is selected from Mg, Al, Ti, Zr, Mo, W, Nb, Sb, and Ta,

$$a + b + c = 1.$$

In one embodiment of the present invention at least 60 vol-% of the secondary particles of inventive (oxy) hydroxide or oxide are agglomerated from primary particles that are essentially radially oriented,

"Essentially radially oriented" does not require a perfect radial orientation but includes that in an SEM analysis, a deviation to a perfectly radial orientation is at most 11 degrees, preferably at most 5 degrees.

Preferably, at least 60% of the secondary particle volume is filled with radially oriented primary particles. Preferably, only a minor inner part, for example at most 40%, preferably at most 20%, of the volume of those particles is filled with non-radially oriented primary particles, for example, in random orientation.

In one embodiment of the present invention, inventive particulate transition metal (oxy)hydroxide or oxide has a form factor in the range of from 0.85 to 1 and an axis ratio of the bounding box in the range of from 1.00 to 1.20.

To determine the axis ratio of the bounding box of a single particle, the smallest possible rectangular bounding box is set around the top view SEM image of a particle. The axis ratio is calculated from the length of the two sides $a_1$ and $a_2$ (with $a_1 \geq a_2$) by: axis ratio of the bounding box = $a_1/a_2$.

While, a perfect sphere would possess an axis ratio of the bounding box of 1.0, all deviations from perfect sphericity lead to an axis ratio > 1.0.

In one embodiment of the present invention the specific surface (BET) of inventive precursor is in the range of from 2 to 120 $m^2/g$, determined by nitrogen adsorption, for example in accordance with to DIN-ISO 9277:2003-05. The outgassing temperature is 120°C.

Inventive particulate (oxy)hydroxides and oxides are excellently suited for the manufacture of cathode active materials for lithium-ion batteries. A further aspect of the present invention is thus related to the use of inventive particulate (oxy)hydroxides or oxides for the manufacture of a cathode active material for lithium-ion batteries.

A further aspect of the present invention is directed towards a process for the manufacture of a cathode active material for lithium-ion batteries wherein said process comprises the step of converting an inventive particulate (oxy) hydroxide or oxide with a lithium compound and, optionally, with a dopant selected from oxides, (oxy)hydroxides and hydroxides of a metal selected from Ti, Zr, Mo, W, Al, Sb, Mg, Nb, and Ta, at a temperature in the range of from 600 to 1,100°C. Such lithium compound is preferably selected from lithium oxide, lithium carbonate and especially lithium hydroxide. Peroxides like $Li_2O_2$ are possible as well, alone or with any of the foregoing. The molar ratio of lithium to TM is preferably in the range of from 1.00 to 1.05 in embodiments wherein the nickel content of TM is 60 mol-% or higher, and the molar ratio of lithium to TM is preferably in the range of from 1.10 to 1.50 in embodiments wherein the manganese content of TM is 60 mol-% or higher.

The present invention is further illustrated by a working example.

Working example

Data given in ppm refers to ppm by weight.

The following set-up is used: a 800-l stirred tank reactor (A.1) equipped with four baffles and a two-stage 45° pitch-blade turbine stirrer, connected to a lamellar clarifier. A suspension buffer connected to a filter press equipped with a vessel to collect wash filtrate (B.1) and (C.1) and a reverse osmosis unit (D.1).

I. Manufacture of inventive and comparative hydroxide and oxide precursor

The following feeds were provided:

Solution ($\alpha$.1): $NiSO_4$, $CoSO_4$ and $MnSO_4$ dissolved in deionized water (molar ratio 91:4.5:4.5, total transition metal concentration: 1.45 mol/kg)

Solution ($\beta$.1): 25wt% NaOH dissolved in deionized water

Solution ($\gamma$.1): 25wt% ammonia in deionized water

Solution (e1.1): Water from reverse osmosis step (d) fed to step (c)

Solution (e2.1): Water from reverse osmosis step (d) fed to step (a)

Seed suspension ($\delta$.1): Average particle size 4.0 $\mu$m, span=0.74, solid content 240 g/l, mother liquor of seed suspension is an aqueous $Na_2SO_4$ solution (~15 w%)

Percentages refer to % by weight unless expressly noted otherwise. All pH values were determined at 23°C

I1.1 Manufacture of comparative hydroxide C-P-CAM.1

Step C-(a.1):

A 800 l-stirred tank reactor with baffles and a two-stage pitch-blade turbine (45° angle, diameter 0.4m) was charged with 700 liters of fresh deionized water. The stirrer speed was adjusted to 150 rpm while the water was heated via the reactor double jacket to 55°C. The temperature was remained constant at 55°C during the complete experiment. Then, solution ($\gamma$.1) was added to adjust the ammonia concentration to 0.5w%. As a next step, 35 kg of suspension ($\delta$.1) was added. The pH value was 11.54. Subsequently, the stirrer speed was adjusted to 396 rpm and feeding solutions ($\alpha$.1), ($\beta$.1), and ($\gamma$.1) was started simultaneously. The stirrer speed was stepwise decreased during the synthesis to a final stirrer speed of 130 rpm. The pH value at 23°C) was kept constant at 11.5 by adjusting the flow of ($\beta$.1), and the ($\gamma$.1) flow was adjusted to keep the $NH_3$ concentration constant at 0.5w%. The ratio between reactor volume (800 l) and volume flow of feeds ($\alpha$.1), ($\beta$.1), and ($\gamma$.1) (called residence time equivalent) was increased over the run-time resulting in an average residence time equivalent of 5.7h. Mother liquor was continuously withdrawn from the suspension using a lamella clarifier resulting in a final solid content in the reactor of 364 g/L after 23.5 hours run-time. The withdrawn mother liquor was collected in a stirred collection vessel. The further processing of the mother liquor are shown below, step (d.1). After completion of the batch, all feed flows were stopped and the final suspension from reactor and lamella clarifier were discharged to a stirred suspension buffer vessel.

Step C-(b.1): The suspension was filtered using a filter press. The filtrate was discarded.

Step C-(c.1): The filter cake was subsequently washed in the filter press first using solution ($\beta$.1) and afterwards using DI-water. The sodium hydroxide wash filtrate was discarded. The water wash filtrate was collected in a collection vessel from where a continuous flow was fed to a reverse osmosis unit (step d.1). In addition, parts of the mother liquor that was collected in a collection vessel during step C-(a.1) and fed to the reverse osmosis unit.

The washed filter cake was dried in cabinet dryer at 120°C for 15h to obtain C-P-CAM.1 with molar composition of Ni:Co:Mn = 91:4.5:4.5, an average particle size (d50) = 14.1 $\mu$m and span = 0.27. A cross-section TEM EDX analysis was conducted which revealed a higher sulfate concentration in the outer surface of the particles than in the core by a factor of 2.2.

Step (d.1):

The reverse osmosis was performed with 100 bar to remove water from the combination of wash filtrate from step (c.1) and mother liquor from step (a.1), thereby obtaining a permeate and a retentate, also referred to as concentrated filtrate. The permeate - water - was collected in a non-stirred collection tank.

I.2 Manufacture of inventive hydroxide precursor P-CAM.2

Step (a.2)

The inventive hydroxide precursor P-CAM.2 was produced like C-P-CAM.1 but with the following modifications. As step (e3.1), water from (d.1) was used for charging the reactor before start of the co-precipitation. During the precipitation phase, the feed solution (e2.1) was combined with solution ($\beta$.1) before being fed into the reator. Specifically, the addition of solution (e2.1) started after 5 h run-time. The mother liquor that was withdrawn during this step was again collected in a collection vessel and was again treated in a reverse osmosis (step d.2)

Step (b.2): The suspension from step (a.2) was filtered using a filter press. The filtrate was discarded.

Step (c.2): The filter cake from step (b.2.) was washed in the filter press first using solution ($\beta$.1) and then with fresh water combined with water generated in step (d.1) in a ratio of 1:10 by weight. By this, the amount of required fresh wash water could significantly be reduced compared to step (c.1). The wash filtrate from step (c.2) was again collected in a collection vessel from where a continuous flow was fed to a reverse osmosis unit (step d.2), identical to (d.1).

The washed filter cake was dried in cabinet dryer at 120°C for 15h to obtain P-CAM.2 with molar composition of Ni:Co:Mn = 91:4.5:4.5, an average particle size (d50) = 14.0 $\mu$m and span = 0.27. A cross-section TEM EDX analysis was conducted which revealed a higher sulfate concentration in the outer surface of the particles than in the core by a factor of 1.3.

I.3 Manufacture of comparative oxide precursor Oxy-C-P-CAM.1

Comparative C-P-CAM.1 was heated in a Linn oven for 2 hours at 450°C under flowing air to obtain mixed metal oxide Oxy-C-P-CAM.1. The comparative Oxy-C-P-CAM.1 had an average particle diameter (D50) of 14.1 $\mu$m, a span of 0.27. A cross-section TEM EDX analysis was conducted which revealed a higher sulfate concentration in the outer surface of the particles than in the core by a factor of 2.2.

I.4 Manufacture of inventive oxide precursor Oxy-P-CAM.2

Inventive P-CAM.2 was heated in a Linn oven for 2 hours at 450°C under flowing air to obtain mixed metal oxide Oxy-P-CAM.2. The inventive Oxy-P-CAM.2 had an average particle diameter (D50) of 14.0 $\mu$m, a span of 0.27. A cross-section TEM EDX analysis was conducted which revealed a higher sulfate concentration in the outer surface of the particles than in the core by a factor of 1.3.

II Manufacture of cathode active materials

II.1 Manufacture of comparative C-CAM.1 using Oxy-C-P-CAM.1

30 g of comparative Oxy-C-P-CAM.1 was mixed with LiOH monohydrate (molar ratio Li/metal = 1.04), 133 mg $TiO_2$ and 122 mg $ZrO_2$ for 15 minutes in a grinding mill. A saggar was charged with the resultant mixture and transferred into a Linn oven. The temperature was raised at rate of 2 C/min to 750 °C under flowing oxygen and then held constant at 750 °C for 8 hours and subsequently allowed to naturally cool under flowing oxygen. The resultant powder was then deagglomerated in a grinding mill and sieved.

30 g powder was then added to 15 ml deionized water, stirred for 2 minutes and then immediately filtered on a Buchner funnel to remove water. The wet filter cake was then dried under an N2 atmosphere with reduced pressure at 120 °C for 10 hours.

The resultant powder was then dry coated with boric acid by mixing 30 g powder, mixing media and 30 mg boric acid for 40 minutes at low speed on a roller mill. A saggar was charged with the dried powder and heat treated in Linn oven. The Linn oven was heated to 300 °C for 2 hours un-der oxygen atmosphere and allowed to cool naturally. Comparative CAM.1 was obtained with a (D50) of 13.9 $\mu$m, a span of 0.26.

II.2 Manufacture of CAM.2 using inventive Oxy-P-CAM.2

CAM.2 was made from Oxy-C- CAM.2 in a similar way as C-CAM.1. CAM.2 was obtained with a (D50) of 14.0 $\mu$m and a span of 0.26.

III. Testing of Cathode Active Material

Inventive CAM.2 and comparative C-CAM.1 were electrochemically tested to investigate the impact of surface smearing on the electrochemical performance.

III.1 Cathode manufacture

Positive electrode: PVDF binder (polyvinylidene difluoride, Solef® 5130) was dissolved in NMP (Merck) to produce a 7.5 wt.% solution. For electrode preparation, binder solution (3 wt.%), graphite (SFG6L, 2 wt.%), and carbon black (Super C65, 1 wt.-%) were suspended in NMP. After mixing using a planetary centrifugal mixer (ARE-250, Thinky Corp., Japan), either inventive CAM.2 or C-CAM.1 (94 wt.%) was added and the suspension was stirred again to obtain a lump-free slurry. The solids content of the slurry was adjusted to 65%. The slurry was coated onto Al foil using a KTF-S roll-to-roll coater (Mathis AG). Prior to use, all electrodes were calendared. The thickness of cathode material was 70 $\mu$m, corresponding to 15 mg/cm$^2$. All electrodes were dried at 105°C for 7 hours before battery assembly.

III.2 Electrolyte Manufacture

A base electrolyte composition was prepared containing 12.7 wt% of $LiPF_6$, 26.2 wt% of ethylene carbonate (EC), and 61.1 wt% of ethyl methyl carbonate (EMC) (EL base 1), based on the total weight of EL base 1. To this base electrolyte formulation 2wt.% of vinylene carbonate (VC) was added (EL base 2).

III.3 Test cell Manufacture - coin type half cells

Coin-type half cells (20 mm in diameter and 3.2 mm in thickness) comprising a cathode prepared as described under II.1.1 and lithium metal as working and counter electrode, respectively, were assembled and sealed in an Ar-filled glove box. In addition, the cathode and anode and a separator were superposed in order of cathode // separator // Li foil to produce a half coin cell. Thereafter, 0.15 mL of the EL base 1 which is described above (III.2) were introduced into the coin cell.

III.4 Evaluation of cell performance

The initial performance, C-rate performance and cycling performance were measured as follows: Coin half cells according to II.3 were tested in a voltage range between 4.3 V to 2.8 V at room temperature. For the initial cycles, the initial lithiation was conducted in the CC-CV mode, i.e., a constant current (CC) of 0.1 C was applied until reaching 4.3V, followed by the CV step until the current dropped to 0.01 C. After 10 min resting time, reductive lithiation was carried out at constant current of 0.1 C up to 2.8 V. For the C-rate test charge and discharge rates were adjusted accordingly. For the cycling test, the constant current was chosen to be 1C until 100 cycles were reached. The results are summarized in Table 1.

Table 1: Physical and electrochemical data of cathode active materials.

| | D50 $\mu$m | span | 1st Discharge mAh/g [0.1C] |
|---|---|---|---|
| CAM.2 | 14.0 | 0.26 | 233.4 |
| C-CAM.1 | 13.9 | 0.26 | 229.7 |

**Claims**

1. Process for making a particulate (oxy)hydroxide of TM wherein TM is a combination of nickel and at least one metal selected from Co and Mn and wherein TM is defined according to general formula (I)

$$(Ni_aCo_bMn_c)_{1-d}M_d \qquad (I)$$

wherein

a is in the range of from 0.25 to 0.98,
b is zero or in the range of from 0.02 to 0.2,
c is in the range of from zero to 0.75, and
d is in the range of from zero to 0.1, and

$$a + b + c = 1,$$

and b + c > zero,
M is selected from Ti, Zr, Mo, W, Al, Sb, Mg, Nb, and Ta and combinations of at least two of the foregoing,
wherein said process comprises the steps of:

(a) Precipitating a hydroxide of TM by combining one or more aqueous solution(s) ($\alpha$) containing sulfates of Ni and of at least one transition metal selected from Co and Mn, and, optionally, at least one further metal selected from Ti, Zr, Mo, W, Al, Sb, Mg, Nb, and Ta, and an aqueous solution ($\beta$) containing sodium hydroxide and, optionally, an aqueous solution ($\gamma$) containing a complexing agent, in a stirred tank reactor,
(b) separating the precipitated hydroxide of TM from the continuous phase by way of a filtration step, thereby obtaining a filter cake and a filtrate,
(c) followed by washing the resultant filter cake with an aqueous medium, thereby obtaining a washed filter cake and a wash filtrate that contains sodium sulfate,
(d) removing water from the wash filtrate, thereby obtaining a concentrated filtrate and water,
(e) at least partially recycling water from step (d) and using it as at least as a part of

(e1) aqueous medium for washing in the filtration step (c) or
(e2) reaction medium in step (a),
(e3) process water,

and wherein at least a part of the filtrate from step (b) is combined with the wash filtrate from step (c).

2. Process according to claim 1 wherein in step (a), mother liquor is withdrawn during step (a) through a solid-liquid separation device and combined with wash filtrate from step (c).

3. Process according to claim 2 wherein mother liquor withdrawn during step (a) through a solid-liquid separation device is mixed with the filtrate from step (b) and, optionally, with concentrated filtrate from step (d), and wherein the resultant mixture is split into a concentrated stream and water in another equipment in analogy to step (d) and wherein at least parts of the obtained water are used analogously to step (e).

4. Process according to claim 2 wherein solid-liquid separation devices are selected from clarifiers, thickeners and candle filters.

5. Process according to any of the preceding claims wherein recycled water from step (d) is used in a dilution of 1:10 to 10:1 with fresh water as wash water in step (c) or reaction medium in step (a).

6. Process according to any of the preceding claims wherein the sulfate content of wash water before commencing step (b) or of the reaction medium at the beginning of step (a) is up to 2 % by weight.

7. Process according to any of the preceding claims wherein step (d) is selected from reverse osmosis methods.

8. Particulate (oxy)hydroxide or oxide of TM wherein TM is a combination of nickel with of at least one metal selected from cobalt and manganese, and, optionally, at least one further metal selected from Ti, Zr, Mo, W, Al, Sb, Mg, Nb, and Ta, wherein said particulate (oxy)hydroxide or oxide has a median particle diameter (D50) in the range of from 2 to 20 $\mu$m and wherein said particulate (oxy)hydroxide or oxide has a higher sulfate concentration in the outer surface of the particles than in the core by a factor of at most 2.0 and wherein said particulate oxide or (oxy)hydroxide has a span of the particle diameter of the secondary particles is in the range of from 0.15 to 0.7 as determined by laser diffraction, and wherein the span refers to (D90 - D10)/D50, and
wherein TM is a combination of metals according to general formula (I)

$$(Ni_aCo_bMn_c)_{1-d}M_d \qquad (I)$$

wherein

a is in the range of from 0.25 to 0.98,
b is zero or in the range of from 0.02 to 0.2,
c is in the range of from zero to 0.75, and
d is in the range of from zero to 0.1,
M is selected from Mg, Al, Ti, Zr, Mo, W, Sb, Nb, and Ta,

$$a + b + c = 1 \, ,$$

and b + c > zero.

9. Particulate oxide according to claim8 wherein the sulfate concentration gradient is essentially constant over the diameter of the particles.

10. Particulate (oxy)hydroxide or oxide according to claim 8 or 9 wherein the span of the particle diameter of the primary particles is in the range of from 0.15 to 2 as determined by laser diffraction, and wherein the span refers to (D90 - D10)/D50.

11. Use of particulate (oxy)hydroxides or oxides according to any of claims 8 to 10 for the manufacture of a cathode active material for lithium-ion batteries.

12. Process for the manufacture of a cathode active material for lithium-ion batteries wherein said process comprises the step of converting a particulate (oxy)hydroxide or oxide according to any of claims 8 to 10 at a temperature in the range of from 600 to 1,100°C with a lithium compound and, optionally, with a dopant selected from oxides, (oxy)hydroxides and hydroxides of a metal selected from Ti, Zr, Mo, W, Al, Sb, Mg, Nb, and Ta.

**Patentansprüche**

1. Verfahren zur Herstellung eines partikelhaltigen (Oxy)hydroxids von TM, wobei TM eine Kombination aus Nickel und mindestens einem Metall aus Co und Mn ist und bei dem TM gemäß der allgemeinen Formel (I) definiert ist

$$(Ni_aCo_bMn_c)_{1-d}M_d \qquad (I)$$

wobei

a liegt im Bereich von 0,25 bis 0,98,
b ist null oder liegt im Bereich von 0,02 bis 0,2,
c liegt im Bereich von null bis 0,75, und
d liegt im Bereich von null bis 0,1, und

$$a + b + c = 1,$$

und b + c > null,
M wird aus Ti, Zr, Mo, W, Al, Sb, Mg, Nb und Ta sowie Kombinationen von mindestens zwei der oben genannten ausgewählt,
wobei dieser Prozess die folgenden Schritte umfasst:

(a) Die Ausfällung eines Hydroxids von TM durch Kombination einer oder mehrerer wässriger Lösungen ($\alpha$) mit Sulfaten von Ni und mindestens eines Übergangsmetalls aus Co und Mn sowie optional mindestens einem weiteren Metall aus Ti, Zr, Mo, W, Al, Sb, Mg, Nb und Ta sowie einer wässrigen Lösung ($\beta$) mit Natriumhydroxid und, optional eine wässrige Lösung ($\gamma$) mit einem Komplexierungsmittel in einem gerührten Tankreaktor,
(b) Trennung des ausgefällte Hydroxids von TM durch einen Filtrationsschritt von der kontinuierlichen Phase, wodurch ein Filterkuchen und ein Filtrat entstehen,
(c) gefolgt vom Waschen des resultierenden Filterkuchens mit einem wässrigen Medium, wodurch ein gewaschener Filterkuchen und ein Waschfiltrat mit Natriumsulfat erhalten werden,
(d) Entfernen des Wassers aus dem Waschfiltrat und Erhalt eines konzentrierten Filtrats und Wassers,
(e) Wobei man zumindest teilweise das Wasser aus Schritt (D) recycelt und es zumindest als Teil von

(e1) wässriges Medium zum Waschen im Filtrationsschritt (c) oder
(e2) Reaktionsmedium im Schritt (a),
(e3) Prozesswasser verwendet,

und wobei mindestens ein Teil des Filtrats aus Schritt (b) mit dem Waschfiltrat aus Schritt (c) kombiniert wird.

2. Prozess gemäß Anspruch 1, bei dem in Schritt (a) die Mutterlauge während Schritt (a) durch eine Fest-Flüssigkeit-Trennanlage abgetrennt und mit Waschfiltrat aus Schritt (c) kombiniert wird.

3. Prozess gemäß Anspruch 2, bei dem der während Schritt (a) entnommene Mutterflüssigkeit durch eine Fest-Flüssigkeits-Trennanlage mit dem Filtrat aus Schritt (b) und optional mit konzentriertem Filtrat aus Schritt (d) vermischt wird, wobei das resultierende Gemisch in einen konzentrierten Strom und Wasser in einer anderen Anlage in Analogie zu Schritt (d) aufgeteilt wird und mindestens Teile des gewonnenen Wassers analog zu Schritt (e) verwendet werden.

4. Prozess gemäß Anspruch 2, bei der Feststoff-Flüssigkeit-Trenngeräte aus Klärern, Eindickern und Kerzenfiltern ausgewählt werden.

5. Prozess gemäß einer der vorherigen Ansprüche, bei denen recyceltes Wasser aus Schritt (d) in einer Verdünnung von 1:10 bis 10:1 mit Frischwasser als Waschwasser in Schritt (c) oder Reaktionsmedium in Schritt (a) verwendet wird.

6. Der Prozess erfolgt gemäß einer der vorangegangenen Behauptungen, wobei der Sulfatgehalt des Waschwassers vor Beginn von Schritt (b) oder des Reaktionsmediums zu Beginn von Schritt (a) bis zu 2 % nach Gewicht beträgt.

7. Prozessieren Sie gemäß einer der vorangegangenen Ansprüche, bei denen Schritt (d) aus Methoden der Umgekehrte Osmose ausgewählt wird.

8. Partikuläres (Oxy)hydroxid oder Oxid von TM, wobei TM eine Kombination aus Nickel mit mindestens einem Metall aus Kobalt und Mangan ist, und optional mindestens ein weiteres Metall aus Ti, Zr, Mo, W, Al, Sb, Mg, Nb und Ta, wobei das betreffende Partikel (Oxy)hydroxid oder Oxid einen mittleren Partikeldurchmesser (D50) im Bereich von 2 bis 20 $\mu$m hat und bei dem das betreffende Partikel-(Oxy)hydroxid oder Oxid Eine höhere Sulfatkonzentration an der äußeren Oberfläche der Partikel als im Kern um einen Faktor von höchstens 2,0, bei der das betreffende Partikeloxid oder (Oxy)hydroxid eine Reichweite des Partikeldurchmessers der Sekundärteilchen hat, liegt im Bereich von 0,15 bis 0,7, wie durch Laserbeugung bestimmt, und wobei die Spanne auf (D90 - D10)/D50 bezieht, und wobei TM eine Kombination von Metallen gemäß der allgemeinen Formel (I) ist

$$(Ni_aCo_bMn_c)_{1-d}M_d \qquad (I)$$

wobei

a liegt im Bereich von 0,25 bis 0,98,
b ist null oder liegt im Bereich von 0,02 bis 0,2,
c liegt im Bereich von null bis 0,75, und
d liegt im Bereich von null bis 0,1,
M wird aus Mg, Al, Ti, Zr, Mo, W, Sb, Nb und Ta ausgewählt,

$$a + b + c = 1 ,$$

und b + c > null.

9. Partikeloxid gemäß Anspruch 8, wobei der Sulfatkonzentrationsgradient im Wesentlichen konstant über den Durchmesser der Partikel ist.

10. Partikuläres (Oxy)hydroxid oder Oxid gemäß Anspruch 8 oder 9, wobei der Spann des Partikeldurchmessers der Primärteilchen im Bereich von 0,15 bis 2 liegt, bestimmt durch Laserbeugung, und wobei sich der Spann auf (D90 - D10)/D50 bezieht.

11. Verwendung von Partikelhydroxiden oder -oxiden gemäß einer der Ansprüche 8 bis 10 zur Herstellung eines kathodenaktiven Materials für Lithium-Ionen-Batterien.

12. Verfahren zur Herstellung eines kathodenaktiven Materials für Lithium-Ionen-Batterien, bei dem der Prozess den Schritt umfasst, ein partikelhaltiges (Oxy)hydroxid oder Oxid gemäß einem der Ansprüche 8 bis 10 bei einer Temperatur im Bereich von 600 bis 1.100 °C mit einer Lithiumverbindung und optional mit einem aus Oxiden ausgewählten Dopant umzuwandeln, (Oxy)hydroxide und Hydroxide eines Metalls, das aus Ti, Zr, Mo, W, Al, Sb, Mg, Nb und Ta ausgewählt wurde.

**Revendications**

1. Procédé de fabrication d'un oxyde particulaire de TM où TM est une combinaison de nickel et d'au moins un métal sélectionné parmi Co et Mn, et où TM est défini selon la formule générale (I)

$$(Ni_aCo_bMn_c)_{1-d}M_d \qquad (I)$$

où

a est dans l'intervalle de 0,25 à 0,98,
b est zéro ou dans l'intervalle de 0,02 à 0,2,
c est dans l'intervalle de zéro à 0,75, et
d est dans l'intervalle de zéro à 0,1, et

$$a + b + c = 1,$$

et b + c > zéro,
M est sélectionné parmi Ti, Zr, Mo, W, Al, Sb, Mg, Nb et Ta ainsi que des combinaisons d'au moins deux des précédents,
où ce processus comprend les étapes suivantes :

(a) Précipitation d'un hydroxyde de TM en combinant une ou plusieurs solutions aqueuses ($\alpha$) contenant des sulfates de Ni et d'au moins un métal de transition sélectionné parmi Co et Mn, et, éventuellement, au moins un autre métal sélectionné parmi Ti, Zr, Mo, W, Al, Sb, Mg, Nb et Ta, ainsi qu'une solution aqueuse ($\beta$) contenant de l'hydroxyde de sodium et, En option, une solution aqueuse ($\gamma$) contenant un agent complexant, dans un réacteur à cuve agitée,
(b) séparant l'hydroxyde précipité de TM de la phase continue par une étape de filtration, obtenant ainsi un gâteau filtrant et un filtrat,
(c) suivi d'un lavage du gâteau filtrant obtenu avec un milieu aqueux, obtenant ainsi un gâteau filtrant lavé et un filtrat de lavage contenant du sulfate de sodium,
(d) retirer l'eau du filtrat de lavage, obtenant ainsi un filtrat et de l'eau concentrés,
(e) au moins partiellement en recyclant l'eau de l'étape (D) et en l'utilisant au moins comme partie de

(e1) milieu aqueux pour le lavage à l'étape de filtration (c) ou
(e2) milieu de réaction à l'étape (a),
(e3) traiter l'eau,

et où au moins une partie du filtrat de l'étape (b) est combinée avec le filtrat de lavage de l'étape (c).

2. Procédé selon l'affirmation 1 où, à l'étape (a), l'alcool mère est retiré à l'étape (a) via un dispositif de séparation solide-liquide et combiné avec un filtrat de lavage de l'étape (c).

3. Procédé selon la revendication 2, dans lequel l'alcool mère extrait à l'étape (a) à l'aide d'un dispositif de séparation solide-liquide est mélangé avec le filtrat de l'étape (b) et, éventuellement, avec un filtrat concentré de l'étape (d), et où le mélange résultant est divisé en un jet concentré et de l'eau dans un autre équipement, analogique à l'étape (d), et où au moins des parties de l'eau obtenue sont utilisées de manière analogue à l'étape (e).

4. Procédé selon la revendication 2, dans lequel les dispositifs de séparation solide-liquide sont sélectionnés parmi des clarifiateurs, épaississants et filtres à bougies.

5. Procédé selon l'une des affirmations précédentes, où l'eau recyclée de l'étape (d) est utilisée dans une dilution de 1:10 à 10:1, avec de l'eau douce comme eau de lavage à l'étape (c) ou comme milieu de réaction à l'étape (a).

6. Procédé selon l'une des affirmations précédentes, où la teneur en sulfate de l'eau de lavage avant le début de l'étape (b) ou du milieu de réaction au début de l'étape (a) est pouvant atteindre 2 % en poids.

7. Processus selon l'une des affirmations précédentes où l'étape (d) est sélectionnée parmi les méthodes d'osmose inverse.

8. Particule (oxy)hydroxyde ou oxyde de TM, où TM est une combinaison de nickel avec d'au moins un métal sélectionné parmi le cobalt et le manganèse, et, en option, au moins un autre métal sélectionné parmi Ti, Zr, Mo, W, Al, Sb, Mg, Nb et Ta, où ledit particule (oxy)hydroxyde ou oxyde a un diamètre médian de particule (D50) dans la plage de 2 à 20 $\mu$m et où ledit oxyoxydhydroxyde ou oxyde particulaire a une concentration de sulfate plus élevée à la surface externe des particules que dans le noyau, d'un facteur au plus de 2,0, et où ledit oxyoxyde ou oxyoxydoxyde a une étendue du diamètre des particules secondaires est comprise entre 0,15 et 0,7 telle que déterminée par la diffraction laser, et où l'étendue fait référence à (D90 - D10)/D50, et

où TM est une combinaison de métaux selon la formule générale (I)

$$(Ni_aCo_bMn_c)_{1-d}M_d \qquad (I)$$

où

a est dans l'intervalle de 0,25 à 0,98,
b est zéro ou dans l'intervalle de 0,02 à 0,2,
c est dans l'intervalle de zéro à 0,75, et
d est dans l'intervalle de zéro à 0,1,
M est sélectionné parmi Mg, Al, Ti, Zr, Mo, W, Sb, Nb et Ta,

$$a + b + c = 1,$$

et b + c > zéro.

9. L'oxyde de particules selon la revendication 8, où le gradient de concentration de sulfate est essentiellement constant sur le diamètre des particules.

10. (Oxy)hydroxyde ou hydroxyde particulaire selon la revendication 8 ou 9, où l'étendue du diamètre des particules primaires est comprise entre 0,15 et 2 telle que déterminée par la diffraction laser, et où l'étendue fait référence à (D90 - D10)/D50.

11. Utilisation de particules (oxy)hydroxydes ou d'oxydes selon l'une des revendications 8 à 10 pour la fabrication d'un matériau actif cathodique destiné aux batteries lithium-ion.

12. Procédé de fabrication d'un matériau actif cathodique pour batteries lithium-ion, dans lequel ce procédé comprend l'étape de conversion d'un particule (oxy)hydroxyde ou d'un oxyde selon l'une des revendications 8 à 10 à une température comprise entre 600 et 1 100°C avec un composé lithium et, éventuellement, avec un dopant sélectionné parmi des oxydes, (oxy)hydroxydes et hydroxydes d'un métal sélectionné parmi Ti, Zr, Mo, W, Al, Sb, Mg, Nb et Ta.

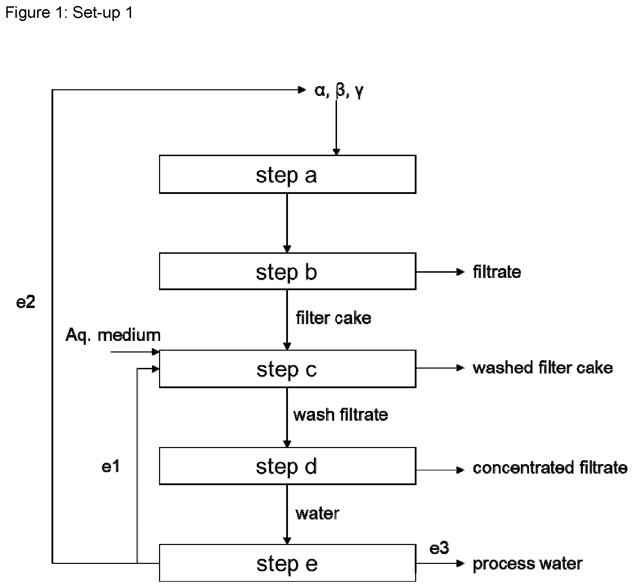

Figure 1: Set-up 1

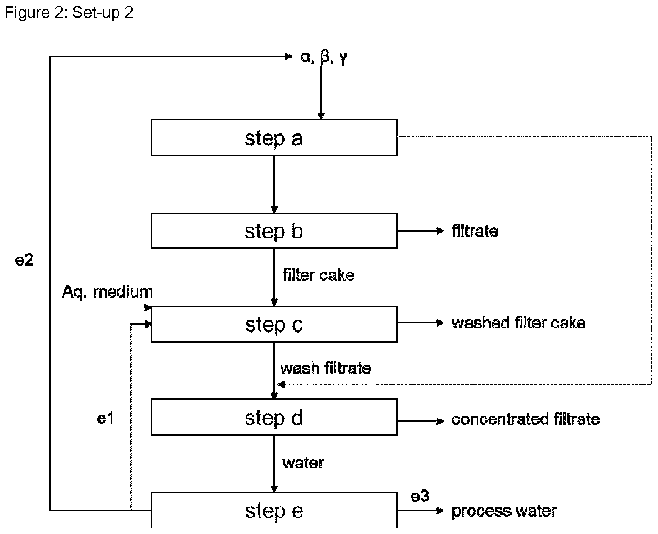

Figure 2: Set-up 2

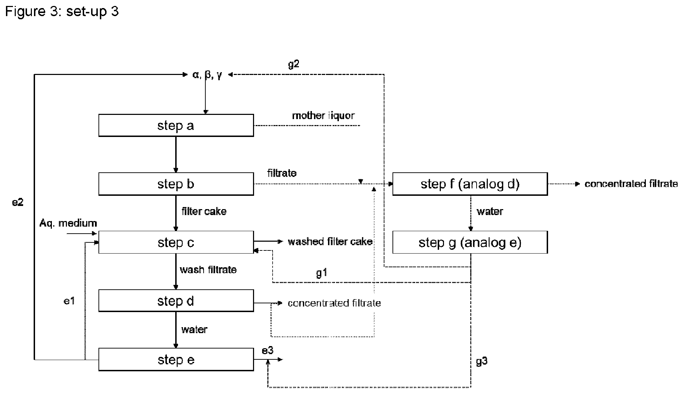

Figure 3: set-up 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021037678 A

- EP 2619140 A